# EUROPEAN PATENT APPLICATION

(11) **EP 1 920 862 A2**
(43) Date of publication of application: **14.05.2008**
(21) Application number: 07425693.4
(22) Date of filing: 02.11.2007
(51) Int. Cl.: B23B 27/16

(54) **Cutting insert and tool holder**

(30) Priority: 07.11.2006 IT MI20062124
(71) Applicant: SCF Snc di Colpani Gianfranco e Pier Giuseppe, 24043 Caravaggio, (BG) (IT)
(72) Inventor: Colpani, Pier Giuseppe, 24043 Caravaggio (BG) (IT)

(57) **Abstract**

This invention pertains to a turning insert type having, in plan, geometrical shape in which side-cutting edge are determined each by a summit angle, featured for having at least an insert side included between two side-cutting edges curved towards insert centre. Concerning locking tool includes a main part equipped with a surface suitable to support insert, directly or interposing a centring head, and insert and centring head's clamping equipments to the main part. Advantageously, clamping equipments and/or centring head are interchangeable and featured by at least a perimetrical supporting plane for insert. The supporting plane is oriented for positioning insert in accordance with a specific cutting angle.

## Description

This invention pertains to an insert for turning and concerning locking tool.

Turning is one of traditional mechanical manufacturing provided for manufacture of pieces removing burr. Manufactured pieces, as an example, metallic bars, are kept in rotation while a cutting insert moves along pieces surface, removing a part of material. This insert is securely supported and locked by an appropriate insert holder tool controlled by the lathe.

Generally, turning can provide pieces external surface manufacturing, or the internal one or the frontal one. By turning, as well as removing pieces superficial material under control, it is possible, for example, threading, profiling and peeling these pieces. Notoriously inserts for turning are classified by a specific ISO standard. As an example, ISO standard distinguishes inserts depending on material, shape, cutting surface number, according to the kind of manufacturing material (aluminium, steel, ceramic materials, etc.) and the manufacture to perform, etc..

Inserts are made of different materials as, for example, tungsten carbides, Titanium carbides compound (TiC) and Titanium nitride (TiN), ceramic and polycrystalline materials (cubic boron nitride or polycrystalline diamond).

Inserts are marketed under different shape, each of these optimized to provide highest performances concerning specific manufacturing of destination. As an example, regarding pieces external surface manufacturing, rhombus shaped inserts are suggested for axial turning and profiling, square shaped inserts are suggested for faceting and circular shaped inserts are suggested for plunge grooving. Regarding pieces internal surface manufacturing, triangular shaped inserts are suggested for axial turning, rhombus shaped inserts suggested for profiling and faceting.

Same shaped inserts differentiate because of summit angle among sides; these angles determine cutting angles, depending on below rake, front rake, etc..

Forces conveyed during mechanical manufacturing can be really significant. Locking tools provide to keep inserts in the right position for manufacturing, minimizing vibrations.

Traditionally locking tools differentiate because of the used mechanism to locking inserts. As an example, well-known are lever locking tools, wedge-shaped bracket locking tools, pivot and bracket locking tools, screw locking tools, bracket locking tools, "rigid clamping" locking tools, etc..

Traditional inserts have a number of side-cutting edges depending on sides number. Side-cutting edges' size depend on summit angles width among sides. As an example, equilateral triangle shaped inserts normally have three or six side-cutting edges because each side-cutting edge is determined by a part of insert corner. Rhombus shaped inserts normally have four or eight side-cutting edges.Ttriangular shaped inserts featured by summit angle wider than 60° have six or twelve side-cutting edges. For further example, look at turning inserts manufacturer catalogues, as SANDVIK for Coromant series, edition 2002.

United States patent filing US 2006/0216121 has as object a rhombus shaped insert and concerning locking tool. The insert can be fixed on concerning tool using a screw. Insert upper surface is equipped with side-cutting edges and lower surface is supplied with cavities fitting locking tool complementary protrusions to maximize connection holding. The insert is rhombus shaped or trapezoidal shaped.

A lot of manufacturing requires use of different type inserts (shape, angles, side-cutting edges' number, materials, etc.), also many for the same manufacturing. Modem lathes are provided with automatic devices to change tools. In other words, lathes are equipped with various interchangeable locking tools, each of these supplied with a turning insert, and lathe arranges tool automatically, and then the suitable insert to pursue manufacturing.

Disadvantageously traditional inserts can be arranged with variable cutting angles and/or rakes in limited time intervals. Therefore it's necessary supply turnings with a lot of inserts to be able to substitute worn out inserts quickly, or substitute an insert with another one having different features that allow using cutting angle/rake more useful in order to the manufacturing in operation. Management costs for companies doing manufacturing are negatively influenced because of necessity of acquiring and stocking various inserts.

On the contrary, from long time is felt necessity of turning inserts availability that must be more versatile than traditional ones.

Locking tools available on the market don't allow changing supported insert position. Insert manufacturing position cannot be modified operating on concerning locking tool, and this cause restrictions in order to the cutting angle usability. Another inconvenience is that the locking tool must have a substantially complementary shape as regards the insert that is connected with and, therefore, different shape inserts require a corresponding tool each. So turnings must be equipped with various locking tools and this cause obvious complications in order to the changing tool automatic devices structure and operating costs.

Instead from long time there's necessity to have locking tools allowing effectively support same insert in different position, in particular in order to the cutting angle, or support different shaped insert.

The aim of this industrial invention is to offer a turning insert allowing resolving simply and effectively traditional inserts inconveniences, allowing minimizing the number of inserts to arrange on lathes, both similar inserts and different features inserts.

Another aim of this industrial invention is to offer a turning insert allowing unifying traditional inserts performances simply and effectively, allowing at the same time minimizing the number of inserts to arrange on lathes, both similar inserts and different features inserts.

Moreover, an aim of this industrial invention is to offer a turning insert equipped with more side-cutting edges compared with corresponding traditional one.

Another aim of this industrial invention is to offer a locking tool for inserts resolving traditional tools inconveniences simply and effectively, proving at the same time cheap and easy to use.

A further aim of this industrial invention is to offer a locking tool for inserts allowing unifying traditional different tools performances simply and effectively, turning out to be at the same time cheap and easy to use.

Moreover, an aim of this industrial invention is to offer a locking tool allowing effectively supporting turning inserts featured by different shape, and in different position, so that same inserts can be used with different cutting angles.

These and further aims are obtained by this industrial invention regarding a type of turning insert distinguished by a geometrical shape featured by side-cutting edges determined each by a summit angle, on the plan, and been typical because at least one of inserts sides between two side-cutting edges is curved towards insert centre.

Preferably, all insert sides are curved towards insert centre. Alternatively to the curving, it is possible to realize segmented sides.

By realizing sides curved towards insert centre (or corresponding segments) it is possible arrange different summit angles on the same insert, and then different side-cutting edges.

Favourably, in accordance with this industrial invention, insert sides can be different among them, offering obvious advantages in order to the insert versatility.

In accordance with an achievement, the insert basically has triangular shape, or rather on the plan is determined by three sides preferably featured by the same length. Unlike triangular shaped inserts or available triangles on the market, in accordance with this industrial invention, the insert is equipped with summit angles less wide than 60° all. Angles can be equal among them or different, as long as less wide than 60°. As an example, first side-cutting edge can have a 58° width summit angle, the second one can have a 57° width summit angle and the third one can have a 56° width summit angle.

Practically, lateral surfaces determining summit angles are tapered. Or rather, looking at insert up surface, on the plan the sides are curved towards insert inside, as an example, towards its axis. In other words, lateral surfaces have a band radius towards insert axis. Sides can be segment, or rather insert lateral surfaces can be composed of many layers.

In accordance with a further achievement, the insert basically has quadrangular shape and summit angles are less wide than 90° all. Angles can be equal or different among them. On the plan, sides determining summit angles are curved towards insert centre or segmented or tapered.

Triangular shaped inserts can have three or six side-cutting edges (three on each insert face). Quadrangular shaped inserts can have four or eight side-cutting edges, hexagonal shaped inserts can have six or twelve side-cutting edges, etc..

In accordance with the invention, advantages are remarkable. As an example, triangular shaped insert's three or six side-cutting edges can have different features and, then, insert allows executing more different manufacturing's compared with a traditional insert equipped with three or six equal side-cutting edges. This way, insert versatility is maximized. Therefore, inserts number required to equip a lathe is lower than for traditional inserts, under the same work condition. This inserts number reduction determines easier spare parts store management and cut in costs.

While using insert in accordance with this industrial invention, when it's necessary using a different side-cutting edge compared with that in use, it's possible to change cutting angle or it's possible to use another side-cutting edge of the same insert, with different features.

Insert versatility is maximized when same insert is used put together with a locking tool inserts holder, in accordance with this invention allowing to arrange insert equipped by different cutting angles.

Besides the invention regards a locking tool for turning inserts, including a main part equipped with a surface supporting a turning insert, directly or interposing a centring head for that insert, and clamping equipments for that insert and for that centring head on the main part, turning insert featured by interchangeability of clamping equipment and/or centring head having at least a perimetrical supporting surface for that insert, and that supporting surface oriented to position insert in conformity with a specific cutting angle.

Advantageously, locking tool can be used either combined with the insert in accordance with this industrial invention or with traditional inserts ISO-type or equivalent.

The insert can be directly arranged on supporting surface and locked by concerning clamping equipment. Insert flanks rest on one or more head supporting surfaces, for example a bracket.

Alternatively, the insert can be arranged and locked on centring head, which is locked on tool's supporting surface. Insert flanks rest on one or more centring head's supporting surfaces and head's flanks rest on one or more insert's contact surfaces.

Perimetrical supporting surfaces preferably are wedge-type, or rather inclined compared with supporting surface.

Clamping equipments can be a screw, a pin, a bracket, a wedge shaped bracket, or equivalent and preferably equipped with a pivot, or rather a protrusion intended for being put in an insert cavity to convey locking pressure. As an example, the bracket, or the wedge shaped bracket, can be restrained to the tool main part by a screw or a pin and is equipped with at least a wedged shaped part to use a corresponding groove made from tool main part. This way, the bracket, or the wedge shaped bracket, cannot move after being screwed in tool main part.

The centring head is drilled and can be fixed at tool supporting surface by a screw or a pin.

When insert works on head or concerning bracket's supporting surface, being in first work position, insert operative side-cutting edge works with first cutting angle. To change cutting angle it's enough substitute centring head, if there's one, with another head equipped with differently oriented supporting surface compared with supporting surface of the head to substitute. Alternatively, it's enough change the bracket (or the wedge shaped bracket) with another bracket having supporting surface oriented as desired. This way, it's possible to arrange the insert to work with desired cutting angle.

Depending on support surfaces number, the locking tool can be double wedge type, three wedges type, etc..

Tool main part is a circular or squared or rectangular section shank and can be made of usual materials used for this kind of tools.

While using, the insert is put on supporting surface with at least a flank resting on bracket (or wedge shaped bracket) supporting surface and is kept in position with pressure exercised by the bracket's (or wedge shaped bracket's) traction pivot screwed in the tool.

Alternatively, the insert is put on centring head, respectively put on supporting surface, with at least a flank resting on a head supporting surface, and is kept in position with the pressure exercised by the pivot of corresponding clamping equipment screwed in the tool.

Locking tool, in accordance with this industrial invention, is featured by the remarkable advantage of allowing use of turning inserts depending on different cutting angles. This way, it's possible to minimize different inserts supplies to store, having an effective economic savings.

Particularly, in accordance with this invention, the tool allows maximizing insert versatility. The insert can be equipped with side-cutting edges with different angles and then tool can support insert in different position to use different insert side-cutting edges.

As an example, triangular shaped insert can be supported in three different positions to use the three side-cutting edge of insert. Each position corresponds with a insert rotation on supporting surface.

Branch's expert will understand that various positions and number of different side-cutting edges offered to the user is remarkably higher compared with traditional systems.

The repositioning of inserts on the locking tool concerning this invention is simple and quick. It's enough unscrewing clamping bracket and substitute it with a different bracket, or rather a second bracket featured by supporting surfaces differently oriented compared with changed bracket, or rescrewing the clamping bracket in a different position on tool supporting surface.

Advantageously, tool of the invention includes at least a supporting surface, preferably at least two. The supporting surface is wedge type.

Supporting surface can be curved, or rather can extend with bend radius from the tool's supporting pivot axis.

In accordance with the invention, the locking tool also allows reducing machinery equipment's non-operating times; or rather times necessary to arrange an insert in work position. Compared with traditional solutions, it's not necessary disassembling locking tool from lathe to substitute it with another tool equipped with a new insert. In fact the tool allows repositioning insert already supported, in order to obtain the cutting angle desired. It's enough modifying the clamping bracket or the position of the clamping bracket.

Further aspects and advantages of this invention will be clearer from the following explanatory but not restrictive description in order to enclosed plans in which:
- figure n. 1 is view in plan of a first insert, in accordance with this invention;
- figure n. 2 represents view in plan of a second insert, in accordance with this invention;
- figure n. 3 represents a frontal view of a first locking tool, , in accordance with this invention;
- figure n. 4 represents a schematic view of n. 3's tool in different use conditions;
- figure n. 5 represents a frontal view of the second locking tool, in accordance with this invention;
- figures nn. 6-8 are represent schematic views of n. 5's tool in different use conditions;
- figure n. 9 represents a schematic view of different work positions of an insert supported by the n. 5's tool;
- figure n. 10 represents a frontal view of a second locking tool, in accordance with this invention;
- figures nn. 11-13 represent schematic views of n. 10's tool in different use conditions;
- figure n. 14 represents a frontal view of a third locking tool, in accordance with this invention;
- figure n. 15 represents a lateral view ofn. 14's tool;
- figure n. 16 represents a section along B-B line shown in figure n. 14;
- figure n. 17 represents a view in section along A-A line shown in figure n. 14;
- figure n. 18 represents a frontal view of a fourth locking tool, in accordance with this invention;
- figure n. 19 represents a view in section along figure n. 8's A-A line;
- figure n. 20 represents an insert.

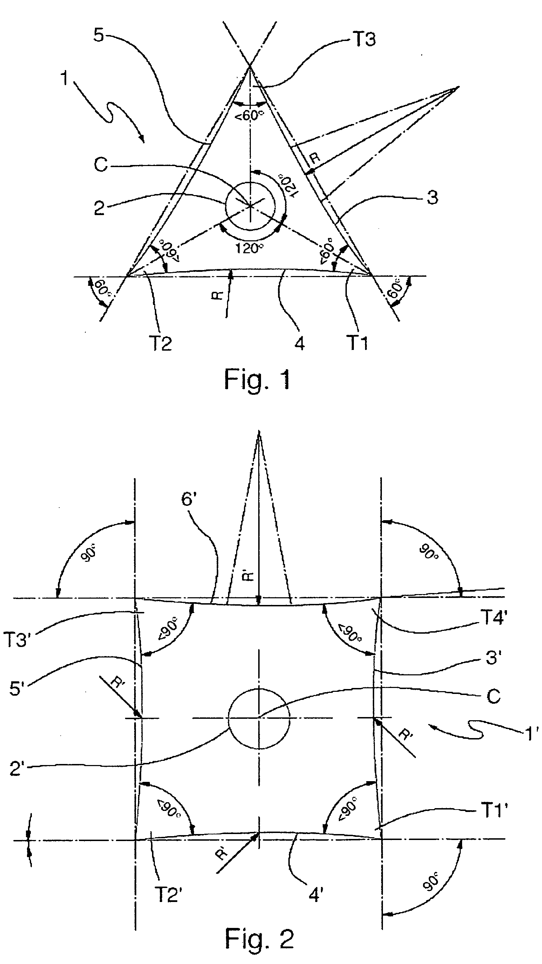

In order to the figure n. 1, is shown a first triangular shaped insert 1 (ref. 1, fig. 1) in accordance with this invention. Practically, figure n. 1 shows the insert up side of insert 1 (ref. 1, fig. 1) that is equipped with a second below side equal to the first. Insert 1's thickness (ref. 1, fig. 1) can be, for example, to 4 mm. Generally, insert 1's thickness (ref. 1, fig. 1) can be equal to the thickness typically used for turning inserts. The insert 1 (ref. 1, fig. 1) can be realized in a traditional material, for example, a ceramic one, a sintered or polycrystalline one, etc..

The insert 1 (ref. 1, fig. 1) has a central cavity 2 (ref. 2, fig. 1) passing through the engagement by clamping equipments to a locking tool.

The insert 1 (ref. 1, fig. 1) shown in figure is equipped with three side-cutting edges T1-T3 (ref. T1-T3, fig. 1) determined by summit angles included among insert sides. Every side-cutting edges T1-T3 (ref. T1-T3, fig. 1) have acute summit angles, and in example shown in figure these angles are less wide 60°, on the contrary of traditional inserts featured by summit angles equal or wider than 60° (triangular shaped inserts).

Side-cutting edges T1-T3 (ref. T1-T3, fig. 1) are obtained realizing insert 1 (ref. 1, fig. 1) featured by sides 3, 4 and 5 (ref. 3-5, fig. 1) curved towards insert C centre (ref. C, fig. 1). In figure n. 1 is shown the R bend radius (ref. R, fig. 1) of these sides.

The insert 1 (ref. 1, fig. 1) represents a central symmetry as regards to cavity 2's centre (ref. 2, fig. 1) (are shown angles between median lines equal to 120° width) and therefore side-cutting edges T1-T3 (ref. T1-T3, fig. 1) are identical. Generally, band radius can be different for each side 3-5 (ref. 3-5, fig. 1), so that summit angles are different among them. As an example, T1 side-cutting edge (ref. T1, fig. 1) can have a summit angle equal to 59° width, T2 side-cutting edge (ref. T2, fig. 1) can have a summit angle equal to 58° width and T3 side-cutting edge (ref. T3, fig. 1) can have a summit angle equal to 57° width.

Compared with traditional turning inserts, insert 1 is more versatile because its side-cutting edges can have different features among them.

Figure n. 2 shows a different insert 1' (ref. 1', fig. 2) having quadrangular shape, in accordance with this invention. Also insert 1' (ref. 1', fig. 2) is equipped with a central cavity 2'(ref. 2', fig. 2). Summit angles determining four side-cutting edges T1'-T4'(ref. T1'-T4', fig. 2) are acute all, or rather less wide than 90°. Insert 2' flanks (ref. 2', fig. 2) are smoothed, or rather are featured by a concavity turned towards cavity 2' centre (ref. 2', fig. 2). Sides 3'-6' (ref. 3'-6', fig. 2) bend radius R' (ref. R', fig. 2) is equal. Generally, even insert 1' (ref. 1', fig. 2) can be featured by sides having different bend radius.

Alternatively, inserts 1 (ref. 1, fig. 1) and 1' (ref. 1', fig. 2) can be featured by segmented sides and not curved.

In other words, inserts flanks can be determined by tapered surfaces and not by curved surfaces.

Side-cutting edges T1'-T4' (ref. T1'-T4', fig. 2) can be identical, as shown in figure n. 2, or can be determined by different summit angles, however less wide than 90°. As an example, side-cutting edges can be determined by 88°, 87°, 86,5°, etc. width summit angles.

In accordance with this invention, insert can have different shapes compared with these shown in figures n. 1 and n. 2. As an example, inset can be basically hexagonal shaped, octagonal shaped, etc..

Inserts 1 (ref. 1, fig. 1) and 1' (ref. 1', fig. 2) allow reducing inserts supplies usually arranged for turning. In accordance with this invention, side-cutting edges wider variety on the insert allows reducing the number of different inserts to store.

While turning, or during an equivalent manufacture, a special locking tool supports inserts 1 (ref. 1, fig. 1) and 1'(ref. 1', fig. 2), for example a locking tool typically expected on lathe tools holder. When it's necessary to modifying side-cutting edge used, for example side-cutting edge T 1 (ref. T1, fig. 1), or rather when it's necessary using a different featured side-cutting edge compared with the used one, it can be simply used another side-cutting edge of the invention insert, for example side-cutting edge T2 (ref. T2, fig. 1), without necessarily using a different insert, as actually required.

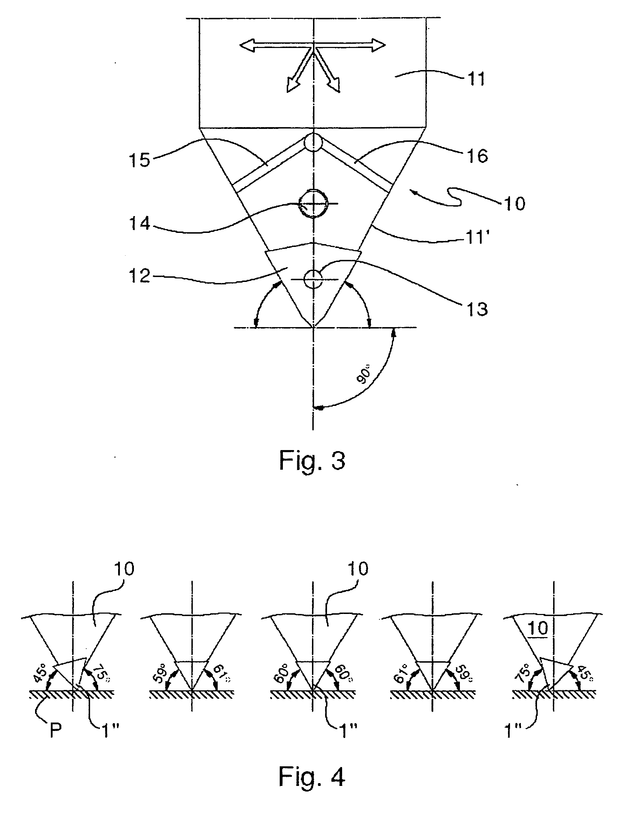

Figure n. 3 shows a 10's tools holder locking tool (ref. 10, fig. 3), in accordance with this invention, allowing making work inserts in different positions, so that arrange same inserts with the most suitable cutting angle for a specific manufacture.

Tool 10 (ref. 10, fig. 3) has a main part 11 (ref. 11, fig. 3) equipped with a part of stem, for example a shank, featured by squared or circular section. Tool 10's below point 11' (ref. 10, fig. 3 and ref. 11', fig. 3) is equipped with a supporting surface 12 (ref. 12, fig. 3) for turning insert, in accordance with this invention or the traditional type one, for example ISO inserts. Supporting surface 12 (ref. 12, fig. 3) is equipped with a protruding pivot 13 (ref. 13, fig. 3) intended for cavity 2 (ref. 2, fig. 1), insert 1, 1"s (ref. 1, fig.1 and ref. 1', fig. 2) cavity 2, 2' (ref. 2, fig. 1 and ref. 2', fig. 2), or eventually a traditional insert cavity.

Insert 1 (ref. 1, fig. 1), insert 1' (ref. 1', fig. 2) or traditional insert are revolving on pivot 13 (ref. 13, fig. 3). To block insert in the required position are used specific locking equipments (not shown in figure n. 3), preferably a bracket or a wedge shaped bracket.

Locking equipments are constrained to the tool 10 (ref. 10, fig. 3) by a screw or a pin interlocking in cavity 14 (ref. 14, fig. 3) obtained close to the surface 12 (ref. 12, fig. 3). Locking equipments are preferably self-centring, or rather under pin's clamping force locking equipments conform to guide insert in desired position.

Locking equipments' self-alignment feature, for example a bracket, is obtained by getting appropriate supporting surfaces on tool 10 (ref. 10, fig. 3). In figure n. 3 are shown two wedged shaped supporting surfaces 15 and 16 (ref. 15-16, fig. 3), or rather inclined in comparison with surface 12 (ref. 12, fig. 3), and converging. The bracket is equipped with corresponding supporting surfaces that can reach planes 15 and 16 (ref. 15-16, fig. 3). When the bracket is screwed in tool 10, bracket's supporting surfaces press supporting planes 15 and 16 (ref. 15-16, fig. 3), in accordance with a wedge connection, effectively forbidding incidental bracket's movements.

The bracket is equipped with supporting planes having function of blocking insert 1 (ref. 1, fig. 1), 1' (ref. 1', fig. 2), etc., in desired position. When the bracket is screwed in tool 10 (ref. 10, fig. 3), it positions itself as described before and can reach insert 1, 1' (ref. 1, fig. 1 and ref. 1', fig. 2) so that movements are forbidden.

Figure n. 4 shows, schematically, some of tool 10's examples applications (ref. 10, fig. 3). A wedge shaped bracket (not shown) locks in position triangular shaped ISO traditional insert 1"(ref. 1", fig. 4). Particularly, from left to right, are shown five schematic views, each corresponding to a different position of insert 1" (ref. 1", fig. 4) on supporting surface 12 (ref. 12, fig. 3). Looking at the figure 4 from left to right, in each application cutting angle is 45°, 59°, 60°, 61°, 75° width in comparison with work surface P (ref. P, fig. 4).

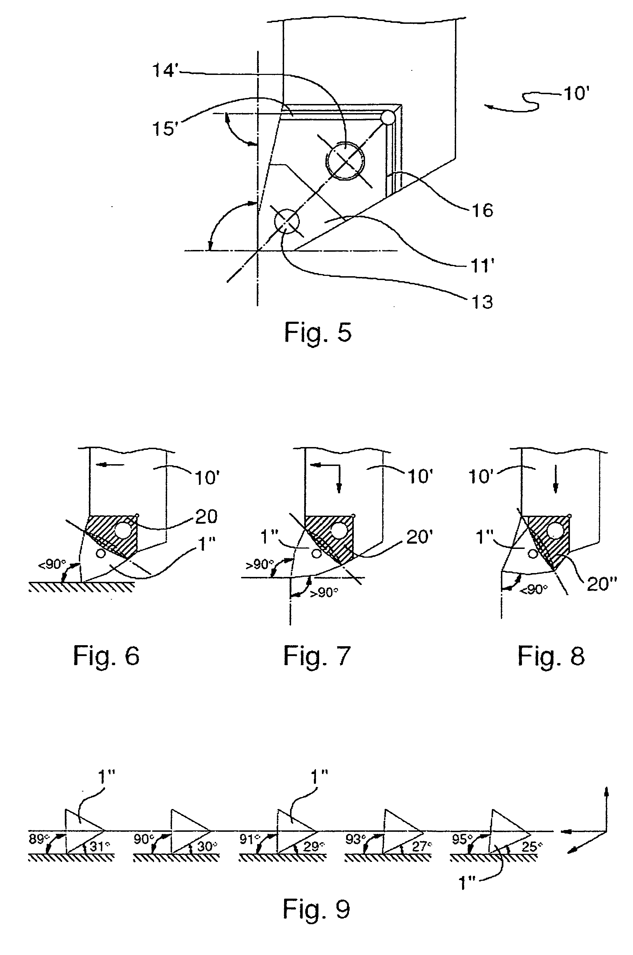

Figure n. 5 shows a second locking tool 10' (ref. 10', fig. 5), in accordance with this invention, in which supporting planes 15' and 16' (ref. 15'-16', fig. 5), wedged shaped (double wedged shaped tool), are arranged at 90° between them and their supporting surface 12 (ref. 12, fig. 3) laterally protrudes in comparison with tool 10' main part (ref. 10', fig. 5).

Figures nn. 6-8 show three possible applications of tool 10' (ref. 10', fig. 6-8) combined with a traditional triangular shaped insert 1" (ref. 1", fig. 4), in accordance with ISO-WNMG standard. Particularly, figure n. 6 shows an insert 1" (ref. 1", fig. 4) locked on tool 10' (ref. 10', fig. 5) in a first position, by a wedge shaped bracket 20 (ref. 20, fig. 6), dashed. Cutting angle marked in figure n. 6 is less wide than 90°.

Figure n. 7 shows insert 1" (ref. 1", fig. 7) locked on tool 10' (ref. 10', fig. 5) by wedge shaped bracket 20' (ref. 20', fig. 7) in a second position, clockwise turned in comparison with the first position on supporting surface 12' (ref. 12', fig. 5). Figure n. 8 shows the insert 1" (ref. 1", fig. 8) locked in a third position by a bracket 20" (ref. 20", fig. 8). Brackets 20 (ref. 20, fig. 6), 20' (ref. 20', fig. 7) and 20" (ref. 20", fig. 8) are equipped with supporting planes suitable to be placed one upon anther on supporting planes of tool 10' (ref. 10', fig. 5)and on insert supported by it, for locking it in work position.

Effectively, locking tool 10 (ref. 10, fig. 3), 10' (ref. 10', fig. 5) in accordance with this invention allows positioning supported inserts as desired, without necessarily modifying insert to obtain different cutting angles.

Insert revolving is obtained changing clamping bracket with others different shaped brackets.

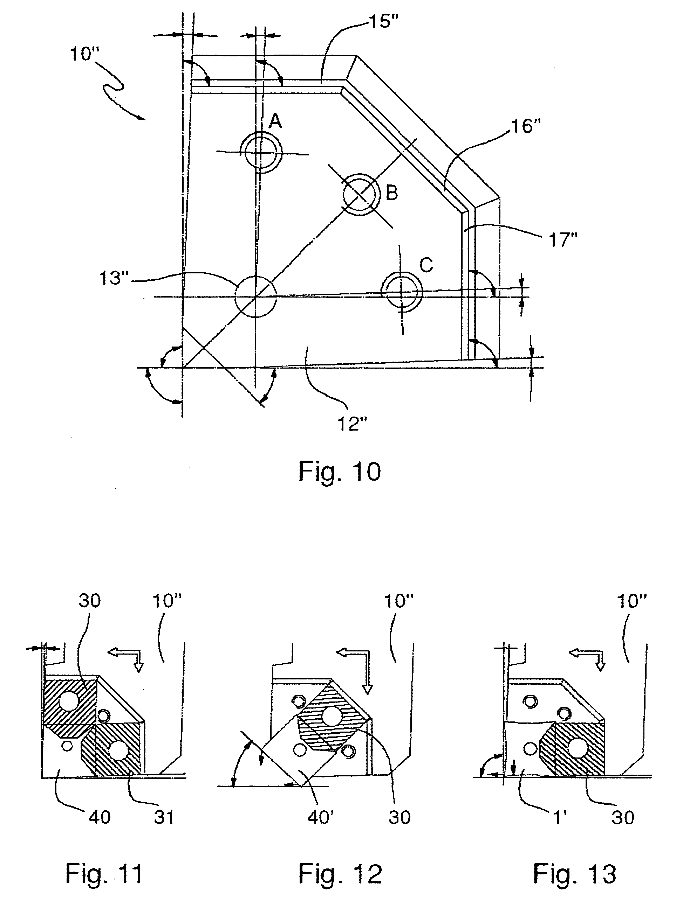

Figure n. 9 shows traditional insert 1' (ref. 1', fig. 2) in different use positions on tool 10" (ref. 10", fig. 10). Cutting angles are marked in figure.

Figure n. 10 shows a third production of locking tool 10" (ref. 10", fig. 10) in accordance with this invention, equipped with three wedged shaped supporting planes 15"-17" (ref. 15"-17", fig. 10) (triple wedged shaped tool). Tool 10" (ref. 10", fig. 10) has three cavities A, B and C (ref. A-C, fig. 10) for using a bracket or an equivalent clamping equipment.

Figures nn. 11-13 show some of possible tool 10" (ref. 10", fig. 10) applications. Particularly, figure n. 11 shows tool 10" (ref. 10", fig. 10) supporting an ISO CNMG type insert 40 (ref. 40, fig. 11). Insert 40 (ref. 40, fig. 11) is locked on tool 10" by two brackets 30 (ref. 30, fig. 11) and 31 (ref. 31, fig. 11), respectively screwed in cavities A (ref. A, fig. 10) and C (ref. C, fig. 10) shown in figure 10. Figure n. 12 shows a square shaped traditional insert 40' (ref. 40', fig. 12) in a second position, clamped by only one bracket 30 (ref. 30, fig. 12), screwed in cavity B (ref. B, fig. 10).

Figure n. 13 shows insert 1' (ref. 1, fig. 2) in accordance with the invention, clamped on tool 10" (ref. 10", fig. 10) by only one bracket 30 (ref. 30, fig. 13), screwed in cavity C (ref. C, fig. 10).

Insert revolving is obtained using bracket, or brackets, 30, 31 (ref. 30-31, fig. 11) in different positions.

Arrows shown in figures nn. 11-13 show direction of cutting forces applied on insert 1' (ref. 1', fig. 2), 40 (ref. 40, fig. 11).

It will be clear to the expert that locking tool 10-10" (ref. 10-10", fig. 3, 5 and 10) allow positioning traditional inserts in various different work positions. While used combined with insert in accordance with the invention, the locking tool maximizes insert versatility, allowing use with many cutting angles.

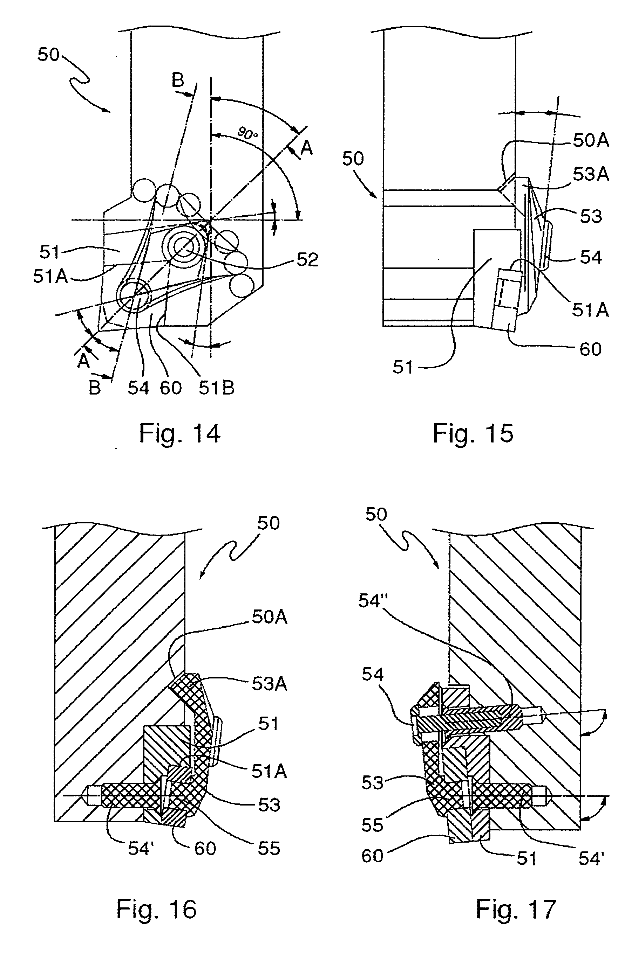

Figure n. 14 shows another locking tool 50 (ref. 50, fig. 14) in accordance with this invention that expects interposition of a centring head 51 (ref. 51, fig. 14) between tool's main part and insert 60 (ref. 60, fig. 14). Head 51 (ref. 51, fig. 14), interchangeable, basically is interposed between the insert and tool's supporting surface 12 (ref. 12, fig. 3). Head 51 (ref. 51, fig. 14) is equipped with supporting surfaces 51A (ref. 51A, fig. 14) and 51B (ref. 51B, fig. 14) proper for centring insert 60 (ref. 60, fig. 14) in position. Changing head 51 (ref. 51, fig. 14) with another head featured by different characteristics, it obtains insert 60's repositioning (ref. 60, fig. 14). A bracket 53 (ref. 53, fig. 14) serves for locking insert 60 (ref. 60, fig. 14) and centring head 51 (ref. 51, fig. 14) against tool 50 (ref. 50, fig. 14). The bracket is screwed in cavity 52 (ref. 52, fig. 14) by a pin 54 (ref. 54, fig. 14), and head 51 (ref. 51, fig. 14) is screwed in surface 12 (ref. 12, fig. 3) by pin 54' (ref. 54', fig. 17). A second pin 54" (ref. 54", fig. 17) blocks head 51 (ref. 51, fig. 14) on tool's main part 11 (ref. 11, fig. 3). The pin 54" is in its turn internally threaded to allow combining with pin 54 (ref. 54, fig. 17).

Figure n. 15 represents a lateral view of tool 50 (ref. 50, fig. 15) with insert 60 (ref. 60, fig. 15) locked in a first work position. It's possible remarking that centring head 51 (ref. 51, fig. 15) can be tapered to keep insert 60 (ref. 60, fig. 15) inclined.

Figures nn. 16 and 17 represent tool 50's sections (ref. 50, fig. 16-17), respectively along A-A (ref. A, fig. 14) and B-B (ref. B, fig. 14) lines on figure n. 14. Particularly, in order to figure n. 16, the bracket 53 (ref. 53, fig. 16) is equipped with a wedged shaped portion 53A (ref. 53A, fig. 16) suitable for tool 50's groove 50A (ref. 50, fig. 16 and ref. 50A, fig. 16). In this sense the bracket 53 (ref. 53, fig. 16) is wedge type. Combination between bracket 53 (ref. 53, fig. 16) and tool can prevents insert 60's eventual movements (ref. 60, fig. 16) when pins 54 (ref. 54, fig. 14) and 54' (ref. 54', fig. 16) are locked.

As remarkable on figures nn. 16 and 17, the bracket 53 (ref. 53, fig. 16-17) is equipped with a traction pivot 55 (ref. 55, fig. 16-17), or rather a protrusion suitable to be put in cavities 2, 2' (ref. 2, fig. 1 and ref. 2', fig. 2) of insert 60 (ref. 60, fig. 16-17). The traction pivot conveys insert 60's clamping force (ref. 60, fig. 16-17), blocking it against centring head's supporting panes 51A (ref. 51A, fig. 16) and 51B (ref. 51B, fig. 14).

Insert 60 (ref. 60, fig. 14-17) can be in accordance with the invention type, or traditional type, for example ISO CNMG type.

Inserts 1, 1' (ref. 1, fig. 1 and ref. 1', fig. 2) and locking tools 10 (ref. 10, fig. 3), 10' (ref. 10', fig. 5), 10" (ref. 10", fig. 10), 50 (ref. 50, fig. 14-17) allow executing traditional manufactures of turning, threading, shearing, grooving, profiling, peeling, etc., of pieces easily and effectively, requiring storage of less inserts 1 (ref. 1, fig. 1), 1' (ref. 1', fig. 2) and tool 10 (ref. 10, fig. 3), 10' (ref. 10', fig. 5), 10" (ref. 10", fig. 10), 50 (ref. 50, fig. 14-17) in comparison with technical note.

The repositioning of inserts 1 (ref. 1, fig. 1), 1' (ref. 1', fig. 2), 60 (ref. 60, fig. 14-17) on tools 10 (ref. 10, fig. 3),10' (ref. 10', fig. 5), 10" (ref. 10", fig. 10), 50 (ref. 50, fig.

14-17) is easy and quick. It's enough unscrewing clamping bracket and changing it with a different bracket, or rather a bracket equipped with supporting planes differently oriented, or rescrewing clamping bracket in a different position on tool 12's supporting surface (ref. 12, fig. 3).

Inserts 1 (ref. 1, fig. 1), 1' (ref. 1', fig. 2) are equipped with more side-cutting edges in comparison with corresponding (for shape) traditional inserts. Tools 10 (ref. 10, fig. 3),10' (ref. 10', fig. 5), 10" (ref. 10", fig. 10), 50 (ref. 50, fig. 14-17) allow quick repositioning of inserts with different cutting angles. In other words, a single locking tool 10 (ref. 10, fig. 3),10' (ref. 10', fig. 5), 10" (ref. 10", fig. 10), 50 (ref. 50, fig. 14-17) allow using a traditional insert in more work positions in comparison with using known tools. While using with inserts 1 (ref. 1, fig. 1), 1' (ref. 1', fig. 2) of invention, tools 10 (ref. 10, fig. 3),10' (ref. 10', fig. 5), 10" (ref. 10", fig. 10), 50 (ref. 50, fig. 14-17) maximize variety of cutting angles that can be set, or rather maximize versatility of inserts 1 (ref. 1, fig.1), 1' (ref. 1', fig. 2), that's clearly positive in order to the reduction of turning inserts and tool number to stock in a store.

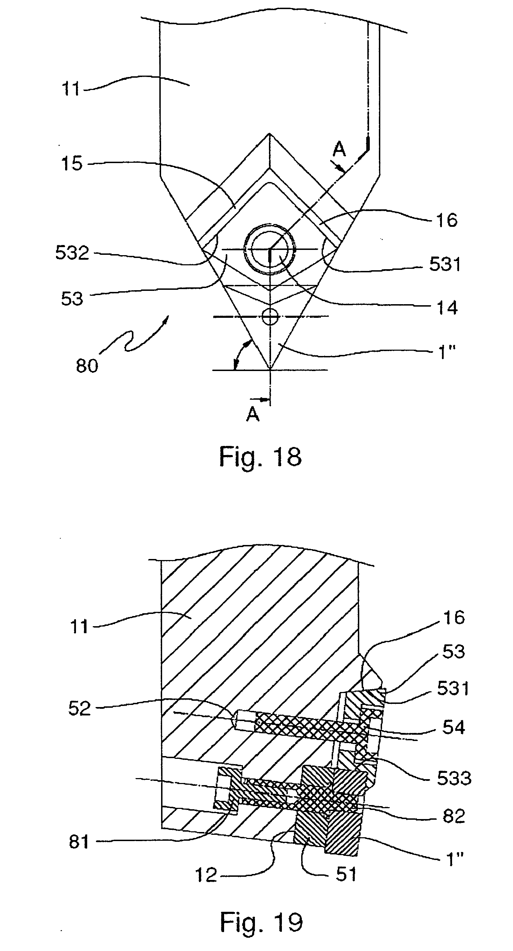

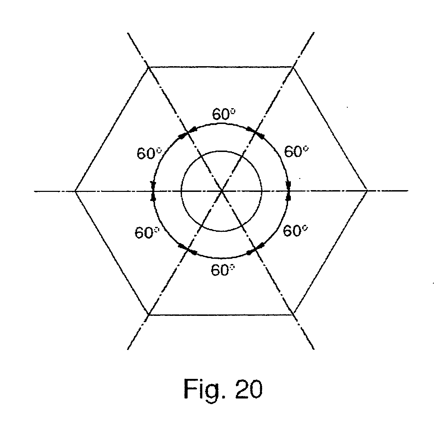

Figures nn. 18 and 19 show a fourth locking tool 80 (ref. 80, fig. 18) in accordance with this invention, equipped with two wedged shaped surfaces 15 (ref. 15, fig. 18) and 16 (ref. 16, fig. 19). Tool 80 (ref. 80, fig. 18) supports triangular shaped insert ISO 1" (ref. 1", fig. 18-19). Insert 1" (ref. 1", fig. 18-19) is put between a centring head 51 (ref. 51, fig. 19) and a wedge shaped bracket 53 (ref. 53, fig. 18-19). Centring head 51 (ref. 51, fig. 19) and wedge shaped bracket 53 (ref. 53, fig. 18-19) are different shaped in comparison with head and bracket shown on figures nn. 14-17.

On the figure n. 19 it's remarkable that centring head 51 (ref. 51, fig. 19) is screwed in tool 80's part 11 (ref. 80, fig. 18 and ref. 11, fig. 18) by a screw 81 (ref. 81, fig. 19 and ref. 11, fig. 19) put in a cavity obtained in part 11 (ref. 11, fig. 19), opposite side in comparison with supporting surface 12 (ref. 12, fig. 19). The screw 81 (ref. 81, fig. 19) also supports a centring pivot 82 (ref. 82, fig. 19) revolvingly binding centring cavity of insert 1" (ref. 1", fig. 19). The wedge shaped bracket 53 (ref. 53, fig. 18-19) is also screwed in tool 80's part 11 (ref. 80, fig. 18 and ref. 11, fig. 1) by the screw 54 (ref. 54, fig. 19) and has ledge surfaces 531 (ref. 531, fig. 18-19) and 532 (ref. 532, fig. 18) respectively against wedge shaped surfaces 15 (ref. 15, fig. 18) and 16 (ref. 16, fig. 19).

The bracket 53 (ref. 53, fig. 18-19) is moulded to locking insert 1" (ref. 1", fig. 18-19), or a different insert, for example insert 1 (ref. 1, fig. 1), on tool 80 (ref. 80, fig. 18) with desired cutting angle. Work surface 533 (ref. 533, fig. 19) prevents insert 1" (ref. 1", fig. 19) from revolving during turning.

Advantageously, when it wants modifying cutting angle of inserts 1 (ref. 1, fig. 1), 1" (ref. 2, fig. 2), etc. placed on tool 80 (ref. 80, fig. 19), it's enough unscrewing bracket 53 (ref. 53, fig. 19) from tool's part 11 (ref. 1, fig. 19) and releasing insert from surface 533's action (ref. 11, fig. 19). Then, inserts 1, 1", etc. (ref. 1, fig. 1 and ref. 1", fig. 19) can be revolved on centring pivot 82 (ref. 82, fig. 19), for example to use a new side-cutting edge, or to modify cutting angle already used. Rescrewing the bracket 53 (ref. 53, fig. 18) in tool 80's part 11 (ref. 80, fig. 18 and ref. 11, fig. 18), inserts 1 (ref 1, fig. 1), 1" (ref. 1", fig. 18) are locked in the new chosen position. If insert 1" (ref. 1", fig. 18) desired rotation is not realizable using the bracket 53 (ref. 53, fig. 18-19), it's possible using a different bracket, or rather a bracket equipped with ledge surfaces 531 (ref. 531, fig. 18-19), 532 (ref. 532, fig. 18), 533 (ref. 533, fig. 19), etc. inclined correspondingly to the desired position for insert 1" (ref. 1", fig. 18-19).

Generally, locking tool in accordance with this invention is equipped with at least a wedge shaped surface for supporting of bracket and/or cutting insert in accordance with desired angle. Preferably, tool is equipped with two or three wedge shaped surfaces.

In tool featured by a single wedge shaped surface, this surface can be arched, or rather can extended with a bend radius from tool's centring pivot, or from tool's extremity, etc..

Figure n. 20 shows an insert 200 suitable for using with locking tool in accordance with this invention, or with a traditional locking tool. Insert 200 gains advantage from hexagonal shape and, therefore, from having more side-cutting edges in comparison with inserts available on the market. Sides curved towards hexagon centre, in accordance with this invention, can feature insert 200.

## Claims

1. Turning insert (1, 1') type (ref. 1, fig. 1 and ref. 1', fig. 2) having, on plan, geometrical shape with side-cutting edges (ref.T1-T3, fig. 1 and ref. T1'-T4', fig. 2) determined each by a summit angle. It is **characterized in that** at least an insert side (ref. 3, fig. 1, ref. 4, fig. 1, ref. 5, fig. 1, ref 3', fig. 2, ref. 4', fig. 2, ref. 5', fig. 2 and ref. 6', fig. 2) included between two side-cutting edges and curved towards centre (ref. C, fig. 1-2) of insert (ref. 1, fig. 1 and ref. 1', fig. 2).

2. Insert in accordance with claim 1 is **characterized in that** quadrangular shape and all summit angles less wide than 90°.

3. Insert in accordance with claim 1 **is characterized in that** triangular shape and all summit angles are less wide than 60°.

4. Insert in accordance with any claim from 1 to 3 is **characterized in that** these summit angles are equal or different among them.

5. Insert in accordance with any previous claim is **characterized in that** sides (ref. 3-5, fig. 1 and ref. 3'-6', fig. 2) determining summit angles have the same length.

6. Insert in accordance with any claim from 1 to 5 is **characterized in that** these sides (ref. 3-5, fig. 1 and ref. 3'-6', fig. 2) belong to lateral concave surfaces of insert.

7. Locking tool (ref. 10, fig. 3, ref. 10', fig. 5-8, ref. 10", fig. 10-13, ref. 50, fig. 14-17 and ref. 80, fig. 18) for turning insert, including a main part (ref. 11, fig. 3, 18-19) equipped with a surface (12, 12', 12") suitable for supporting a turning insert (1, 1'), directly or by interposing a centring head (ref. 51, fig. 14-17) of this insert, and clamping equipments (ref. 20, fig. 6, ref. 20', fig. 7, ref. 20", fig. 8, ref. 30, fig. 11-13, ref. 31, fig. 11 and ref. 53, fig. 15-19) of this insert and this centring head to the main part This tool is **characterized in that** these clamping equipments and/or this centring head interchangeable and for having at least a wedge shaped supporting plane (ref. 51A, fig. 14-16, ref. 55, fig. 16-17 and ref. 533, fig. 19) for this insert, where this supporting plane is oriented to position insert in accordance with a specific cutting angle.

8. Locking tool (ref. 10, fig. 3, ref. 10', fig. 5-8, ref. 10", fig. 10-13, ref. 50, fig. 14-17) in accordance with claim 7. It is **characterized in that** at least a supporting plane on these clamping equipments, in perimetrical position, or defining a part of this centring head on which the insert is put.

9. Locking tool in accordance with claim 8. It is **characterized in that** these clamping equipments having a traction pivot (ref. 55, fig. 16-17) suitable for enter in a cavity (ref. 2, fig. 1 and ref 2', fig. 2) of this insert (ref. 1, fig. 1 and ref. 1', fig. 2).

10. Locking tool in accordance with any previous claims 7-9. It is **characterized in that** these clamping equipments chosen among a screw (ref. 54', fig. 16-17), a pin, a bracket (ref. 30, fig. 11-13 and ref 31, fig. 11), a wedge shaped bracket (ref. 20, fig. 6, ref. 20', fig. 7, ref. 20", fig. 8 and ref. 53, fig. 15-19) or equivalent equipments.

11. Locking tool in accordance with any previous claim 7-10. It is **characterized in that** this bracket, or wedge shaped bracket, constrainable to the tool's main part by a screw (ref. 54, fig. 15, 17 and 19) or a pin and having at least a wedge shaped part (ref. 53A, fig. 15-16, ref. 531, fig. 18 and ref. 532, fig. 18) suitable for use a corresponding groove (ref. 15-16, fig. 3 and ref. 50A, fig. 15-16) obtained in tool's main part (ref. 11, fig. 3,18-19).

12. Locking tool in accordance with any previous claims 7-11. It is **characterized in that** this centring head (ref. 51, fig. 14-17) perforated and constrainable to this tool's supporting surface by a screw (ref. 54', fig. 16) or a pin.

13. Locking tool in accordance with any previous claims 7-12. It is **characterized in that** this main part circular or square section stem shaped.

14. Locking tool use in accordance with any previous claim combined with insert described in claims 1-6 or ISO type traditional insert.

15. Locking tool use in accordance with any previous claim, where this insert is put on this supporting surface with at least a flank resting on bracket or wedge shaped bracket's supporting plane and kept in position by pressure of bracket or wedge shaped bracket screwed in tool's traction pivot (ref 55, fig. 16-17).

16. Locking tool use in accordance with any previous claims from 7 to 14, where this insert is put on this centring head, in its turn put on this supporting surface, with at least a flank resting on centring head's supporting plane, and kept in position by pressure of corresponding clamping equipment screwed in tool's traction pivot.

17. Locking tool's use in accordance with any previous claims 7-13, combined with a traditional turning insert.

18. Tool use in accordance with any previous claims 1-7 combined with a traditional locking tool.
